# EUROPEAN PATENT SPECIFICATION

(11) **EP 0 401 732 B1**
(45) Date of publication and mention of the grant of the patent: **29.12.1993**
(21) Application number: 90110578.3
(22) Date of filing: 05.06.1990
(51) Int. Cl.: B62D 7/15

(54) **A device for steering the rear wheels of a motor vehicle**
Einrichtung zur Lenkung der Hinterräder eines Kraftfahrzeuges
Dispositif de direction des roues arrière d'un véhicule à moteur

(30) Priority: 07.06.1989 IT 6745489
(43) Date of publication of application: 12.12.1990
(73) Proprietor: FIAT AUTO S.p.A., 10135 Torino (IT)
(72) Inventor: Leonti, Sergio, I-10127 Torino (IT); Formento, Gianfelice, I-10134 Torino (IT)
(74) Representative: Gerbino, Angelo

(56) References cited:
- EP-A- 0 208 992
- EP-A- 0 278 439
- WO-A-89/04269
- US-A- 4 505 491
- PATENT ABSTRACTS OF JAPAN, vol. 13, no. 214 (M-827)[3562], 18th May 1989;& JP-A-1 32 974 (SUZUKI MOTOR LTD)

## Description

The present invention relates to a device for steering the rear wheels of a motor vehicle as described in the precharacterising part of the appended main claim.

A device of this type is described, for example, in EP-A-0 278 439, wherein the means for varying the ratio between the steering angle of the front wheels and that of the rear wheels is a complex mechanism formed by a plurality of different elements.

The object of the present invention is to provide a device of the type indicated above whereby the ratio between the steering angle of the front wheels and that of the rear wheels can be varied simply and reliably according to the speed of the vehicle.

This object is achieved by a device of the type indicated above having the characteristics given in the characterising part of the appended main claim.

In particular, it is convenient for the device to steer the front and rear wheels in opposite directions at low speeds and in the same direction at high speeds, appreciably improving the manoeuvrability and stability of the vehicle.

Advantages and characteristics of the present invention will become clear from the following detailed description given with reference to the appended drawings, provided purely by way of non-limiting example, in which:
Figure 1 is a schematic view of some details of a motor vehicle provided with a device according to the present invention,
Figure 2 is a cut-away perspective view of a flexible cable used in the device according to the invention,
Figure 3 is a schematic perspective view of the mechanism which enables the ratio between the steering angle of the front wheels and that of the rear wheels to be varied according to the speed of the vehicle,
Figures 4 and 5 are schematic plan views of the detail shown in Figure 3 in two different operating conditions, and
Figure 6 is a schematic perspective view of an alternative embodiment of the mechanism of Figure 3.

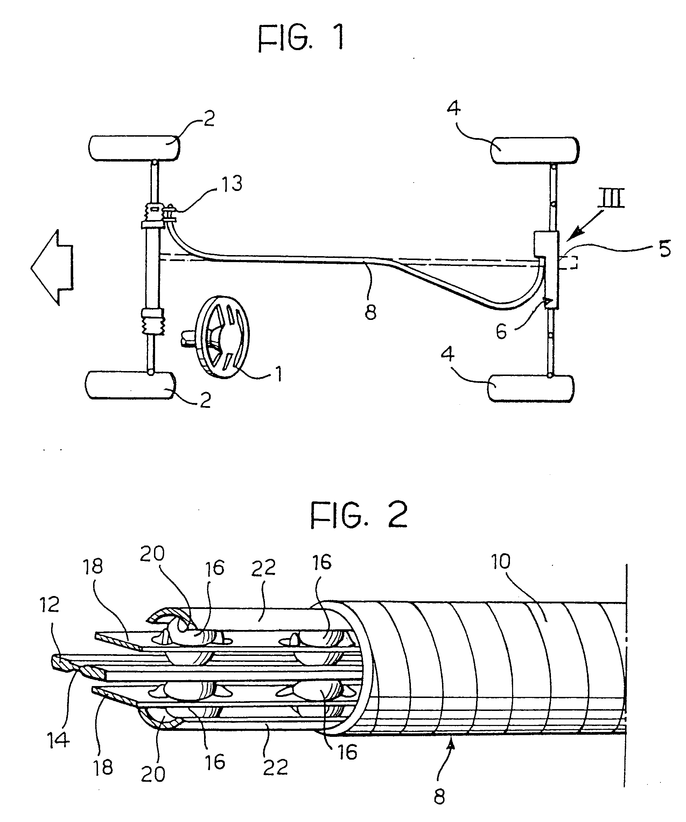

In a motor vehicle (Figure 1), the steering wheel 1 is connected to the front wheels 2 by means of a kinematic steering chain of known type, not shown. An electrical or hydraulic actuator mechanism 5, also of known type, is situated in correspondence with the axle of the rear wheels 4 and is driven by an hydraulic or electrical servo-control 6 to steer the rear wheels 4. The kinematic steering chain is connected to the servo-control 6 by means of a flexible cable 8 for transmitting the steering movement to the rear wheels 4. By virtue of its flexibility, the cable 8 can be positioned in the free spaces in the motor-vehicle body.

The cable 8 (Figure 2) is formed by a flexible tubular sheath 10 which houses a flexible, movable blade 12 which constitutes the movement-transmission member and has an end attachment 13 engaged with the kinematic steering chain. The blade 12 has rounded seats 14 in its main face which enable it to slide relative to two juxtaposed series of balls 16. The balls 16 of each series are held apart by respective strips 18 and can in turn run in rounded grooves 20 formed in profiled elements 22.

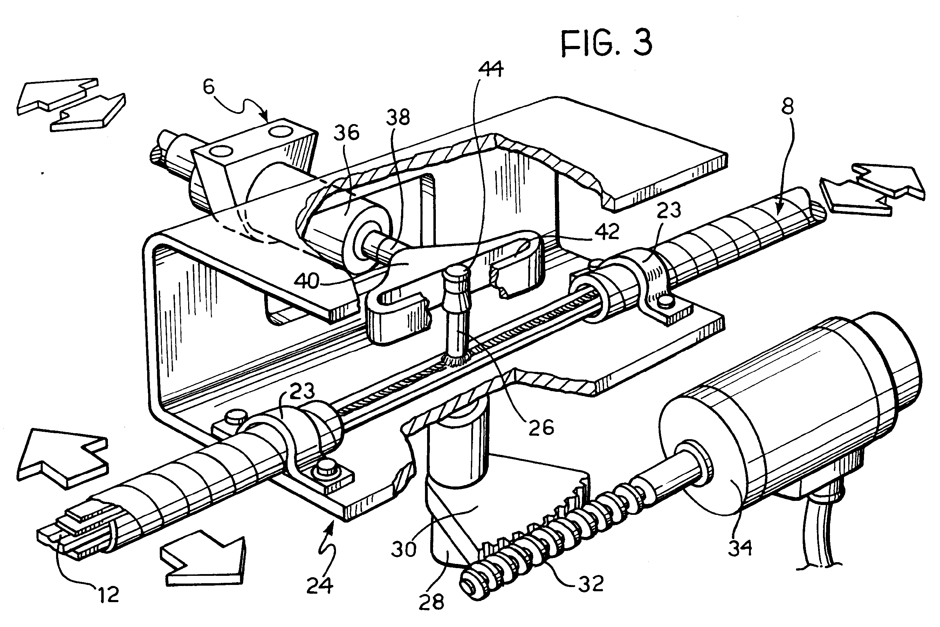

Near the actuator element 6, the cable 8 is fixed (Figure 3) by means of U-bolt-shaped fixing elements 23 to a support member 24 and has a projecting pin 26 connected to the movable blade 12. A shaft 28 is connected rigidly to the support member 24 and carries a toothed sector 30 which meshes with a threaded shaft 32 rotatable by a stepped motor 34 in dependence on the speed of the motor vehicle. The support member 24 can thus rotate about an axis perpendicular to its own general plane.

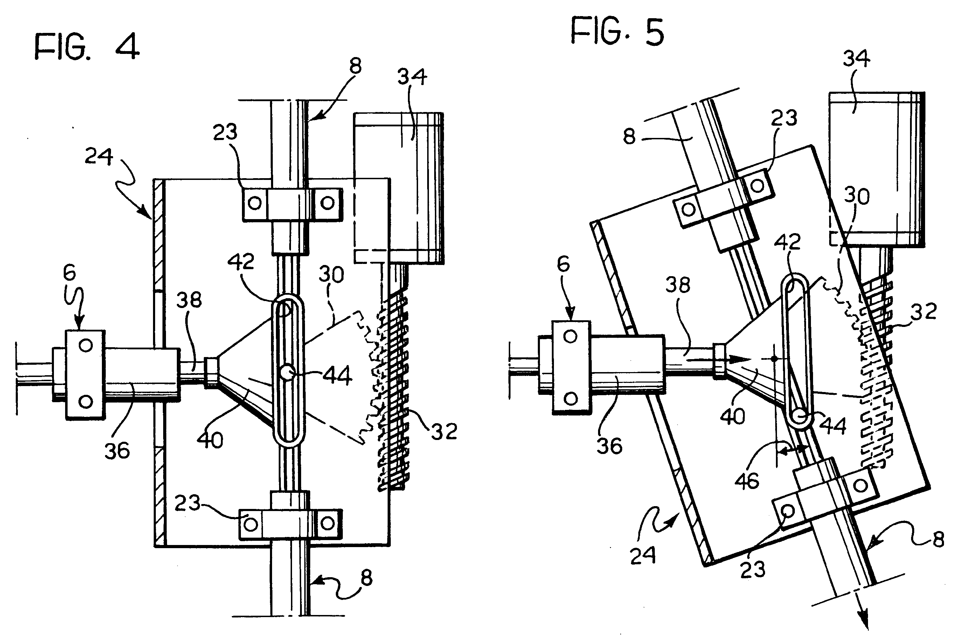

The servo-control 6, in the embodiment illustrated, comprises a hydraulic valve 36, but could alternatively be an equivalent electrical system, and is provided with a movable member 38 to which is fixed a guide element 40 defining a slot-like aperture 42 which is substantially parallel to the line of the end part of the cable 8 when the rotation of the support member 24 is zero (Figure 4). The end 44 of the pin 26 fixed to the movable blade 12 of the flexible cable 8 is constrained but movable in the slot-like aperture 42.

The operation of the device is governed by a combination of the rotary movements of the support member 24 and the translational movements of the pin 26 in the slot-like aperture 42. The stepped motor 34 rotates the support member 24 and the end part of the cable 8 fixed thereto through an angle 46 which depends, according to a desired relationship, on the speed of the motor vehicle. Hence, when the steering movement of the front wheels 2 is transmitted along the cable 8 and causes the translation of the blade 12 and of the pin 26, the latter slides in the slot-like aperture 42 and moves the movable member 38 so as to operate the valve 36 of the servo-control 6 which activates the actuator 5 and consequently steers the rear wheels 4 (Figure 5).

The magnitude of the movement of the movable member 38 depends on the angle 46 between the direction of the slot-like aperture 42 and that of the end part of the cable 8 as a result of the rotation of the support member 24. The device can obviously be adjusted so that, for any speed of the motor vehicle, the servo-control 6 achieves an optional ratio between the steering angle of the rear wheels 4 and that of the front wheels 2.

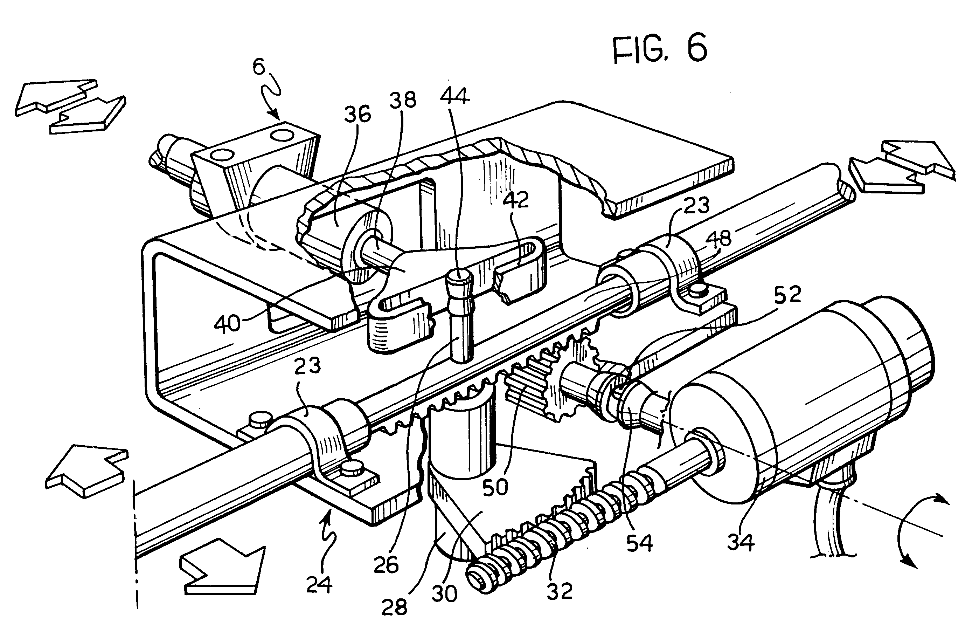

Figure 6 shows an alternative embodiment of the means for connecting the kinematic steering chain to the servo-control 6. In this drawing, parts which are the same as or equivalent to those described above are indicated by the same reference numerals as were used previously.

A rack rod 48 which supports the pin 26 is fixed to the member 24 by means of the U-bolts 23 so as to be slidable along the line identified by its axis. A gear 50 meshes with the rack rod 48 and is connected by means of a ball coupling 52 to a shaft 54 whose rotation is governed, in known manner not illustrated, by the kinematic steering chain. The rotation of the shaft 54 thus causes a translational movement of the rod 48 and a corresponding movement of the end 44 of the pin 26 in the slot-like aperture 42.

The support member 24 is rotated by the motor 34 in a manner similar to that in the previous case.

The ball coupling 52 enables a connection to be maintained under all operating conditions between the gear 50 which is driven by the rack 48 during the rotation of the member 24 and the shaft 54 which rotates about its own axis but is not affected by the rotary motion of the member 24.

## Claims

1. A device for steering the rear wheels (4) of a motor vehicle, comprising:
- a kinematic steering chain for transmitting the steering movement from the steering wheel (1) to the front wheels (2),
- a servo-control (6) which steers the rear wheels (4) through an actuator mechanism (5) said servo-control (6) comprising a control member (38), which is slidable along a first axis, and
- connection means for transmitting the movement between the kinematic steering chain and the servo-control (6) in order to steer the rear wheels (4) as a result of the steering of the front wheels (2) said connection means comprising means for varying the ratio between the steering angle of the front wheels (2) and that of the rear wheels (4) according to the speed of the vehicle,
the device being characterised in that the means for varying the ratio between the steering angle of the front wheels (2) and that of the rear wheels (4) according to the speed of the vehicle comprise:
- a member (24) which supports the end portion of the connection means, said end portion consisting of a guided member, which can slide along a second axis, which is perpendicular to the first axis, when the support member (24) is in a neutral position corresponding to a condition in which the rear wheels (4) are not steerable, and the support member (24) having means which cause it to rotate about a third axis substantially perpendicular to and intersecting the first axis, the magnitude of the rotation depending on the speed of the motor vehicle, and
- a guide element (40) connected rigidly to the control member (38) of the servo-control (6) and defining a slot-like aperture (42) which is substantially parallel to the second axis when the support member (24) is in its neutral position, a pin (26) being fixed to the end portion of the connection means and constrained for movement in the aperture, the movement of the pin (26) in the aperture (42) due to the steering of the front wheels (2) driving a translational movement of the control member (38) the magnitude of which depends on the angle (46) between the slot-like aperture (42) and the end portion of the connection means (8) resulting from the rotation of the support member (24), and the translation causing a corresponding activation of the servo-control(6)and hence of the actuator mechanism (5), with a predetermined steering of the rear wheels (4).

2. A device according to Claim 1, characterised in that the means for rotating the support member (24) comprise a stepped motor (34) driven in dependence on the speed of the motor vehicle and driving a threaded shaft (32) which meshes with a toothed sector (30) fixed to the support member (24).

3. A device according to Claim 1 or Claim 2, characterised in that the connection means comprise a flexible cable (8).

4. A device according to Claim 1 or Claim 2, characterised in that the connection means include a rack rod (48) which constitutes the end portion of the connection means and a gear (50) wich meshes with the rack (48) and is driven by a rotary shaft (54).

5. A device according to Claim 4, characterised in that the gear wheel (50) is connected to the rotary shaft (54) by means of a ball coupling (52).

## Patentansprüche

1. Einrichtung zum Lenken der Hinterräder (4) eines Kraftfahrzeuges, umfassend:
- einen kinematischen Lenkgetriebezug zum Übertragen der Lenkbewegung vom Lenkrad (1) zu den Vorderrädern (2),
- eine Servosteuerung (6), welche die Hinterräder (4) über einen Stellantriebsmechanismus (5) steuert, wobei die Servosteuerung (6) ein Steuerelement (38) umfaßt, welches entlang einer ersten Achse verschiebbar ist, und
- Verbindungsmittel zum Übertragen der Bewegung zwischen dem kinematischen Lenkgetriebezug und der Servosteuerung (6), um die Hinterräder (4) als in Abhängigkeit von der Lenkung der Vorderräder (2) zu lenken, wobei diese Verbindungsmittel Mittel zum Verändern des Verhältnisses zwischen dem Lenkeinschlagwinkel der Vorderräder (2) und dem der Hinterräder (4) in Abhängigkeit von der Geschwindigkeit des Fahrzeuges aufweisen,
dadurch **gekennzeichnet**, daß die Mittel zum Verändern des Verhältnisses zwischen dem Lenkeinschlagwinkel der Vorderräder (2) und dem der Hinterräder (4) in Abhängigkeit von der Geschwindigkeit des Fahrzeuges umfassen:
- ein Teil (24), welches den Endabschnitt der Verbindungsmittel hält, wobei dieser Endabschnitt aus einem geführten Teil besteht, welches entlang einer zweiten Achse verschiebbar ist, die senkrecht zur ersten Achse steht, wenn das Trägerteil (24) sich in einer normalen Position befindet entsprechend einer Betriebsbedingung, bei der die Hinterräder (4) nicht lenkbar sind, und wobei das Trägerteil (24) Mittel aufweist, welche dessen Drehung um eine dritte, im wesentlichen senkrecht zur ersten Achse liegende und diese schneidende Achse bewirken, wobei die Größe der Verdrehung von der Geschwindigkeit des Kraftfahrzeuges abhängt, und
- ein Führungselement (40), welches mit dem Steuerelement (38) der Servosteuerung (6) starr verbunden ist und eine schlitzartige Öffnung (42) bildet, die im wesentlichen parallel zur zweiten Achse liegt, wenn das Trägerteil (24) seine neutrale Position einnimmt, wobei ein Stift (26) am Endabschnitt der Verbindungsmittel befestigt und in der Öffnung zwangsgeführt ist, wobei ferner die Bewegung des Stiftes (26) in der Öffnung (42) infolge der Lenkung der Vorderräder (2) eine Verschiebebewegung des Steuerelementes (38) verursacht, deren Größe von dem Winkel (46) zwischen der schlitzartigen Öffnung (42) und dem Endabschnitt der Verbindungsmittel (8) abhängt, welcher von der Verdrehung des Trägerteils (24) herrührt, und wobei diese Verschiebung eine entsprechende Betätigung der Servosteuerung (6) und damit des Stellantriebsmechanismus (5) verursacht, mit einer vorgegebenen Lenkung der Vorderräder (4).

2. Einrichtung nach Anspruch 1, dadurch **gekennzeichnet,** daß die Mittel zum Verdrehen des Trägerteils (24) einen Schrittmotor (34) umfassen, welcher in Abhängigkeit von der Geschwindigkeit des Kraftfahrzeuges angetrieben wird und eine Gewindespindel (32) antreibt, die mit einem am Trägerteil (24) befestigten Zahnsektor (30) kämmt.

3. Einrichtung nach Anspruch 1 oder Anspruch 2, dadurch **gekennzeichnet,** daß die Verbindungsmittel einen flexiblen Kabelzug (8) umfassen.

4. Einrichtung nach Anspruch 1 oder Anspruch 2, dadurch **gekennzeichnet**, daß die Verbindungsmittel eine Zahnstange (48) umfassen, die den Endabschnitt der Verbindungsmittel bildet, sowie ein Zahnrad (50), welches mit der Zahnstange (48) kämmt und durch eine Drehwelle (54) angetrieben wird.

5. Einrichtung nach Anspruch 4, dadurch **gekennzeichnet**, daß das Zahnrad (50) mit der Drehwelle (54) über eine Kugelgelenkkupplung (52) verbunden ist.

## Revendications

1. Appareil de direction des roues arrière (4) d'un véhicule à moteur, comprenant :
- une chaîne cinématique de direction destinée à transmettre les mouvements de direction du volant (1) aux roues avant (2),
- une servocommande (6) qui dirige les roues arrière (4) par l'intermédiaire d'un mécanisme (5) à organe de manoeuvre, la servocommande (6) comprenant un organe de commande (38) qui peut coulisser suivant un premier axe, et
- un dispositif de raccordement destiné à transmettre le mouvement entre la chaîne cinématique de direction et la servocommande (6) afin que les roues arrière (4) soient dirigées à la suite de la direction dés roues avant (2), ce dispositif de raccordement comportant un dispositif destiné à faire varier le rapport de l'angle de direction des roues avant (2) et de celui des roues arrière (4) en fonction de la vitesse du véhicule,
l'appareil étant caractérisé en ce que le dispositif destiné à faire varier le rapport de l'angle de direction des roues avant (2) et de celui des roues arrière (4) en fonction de la vitesse du véhicule comprend :
- un organe (24) qui supporte la partie d'extrémité du dispositif de raccordement, la partie d'extrémité étant constituée d'un organe guidé qui peut coulisser le long d'un second axe qui est perpendiculaire au premier axe, lorsque l'organe de support (24) est dans une position neutre correspondant à un état dans lequel les roues arrière (4) ne peuvent pas être dirigées, et l'organe de support (24) ayant un dispositif qui provoque sa rotation autour d'un troisième axe sensiblement perpendiculaire au premier axe et recoupant celui-ci, l'amplitude de la rotation dépendant de la vitesse du véhicule à moteur, et
- un élément (40) de guidage raccordé rigidement à l'organe de commande (38) de la servocommande (6) et délimitant une ouverture (42) en forme de fente qui est pratiquement parallèle au second axe lorsque l'organe de support (24) est dans sa position neutre, une tige (26) étant fixée à la partie d'extrémité du dispositif de raccordement et étant obligée de se déplacer dans l'ouverture, le mouvement de la tige (26) dans l'ouverture (42) à la suite de la direction des roues avant (2) provoquant le déplacement en translation de l'organe de commande (38), avec une amplitude qui dépend de l'angle (46) formé par l'ouverture (42) en forme de fonte et la partie d'extrémité du dispositif de raccordement (8) résultant de la rotation de l'organe de support (24), et le déplacement en translation provoquant une activation correspondante de la servocommande (6) et en conséquence du mécanisme (5) à organe de manoeuvre avec une direction prédéterminée des roues arrière (4).

2. Appareil selon la revendication 1, caractérisé en ce que le dispositif destiné à assurer la rotation de l'organe de support (24) comporte un moteur pas à pas (34) entraîné en fonction de la vitesse du véhicule à moteur et entraînant un arbre fileté (32) qui est en prise avec un secteur denté (30) fixé à l'organe de support (24).

3. Appareil selon la revendication 1 ou 2, caractérisé en ce que le dispositif de raccordement comporte un câble flexible (8).

4. Appareil selon la revendication 1 ou 2, caractérisé en ce que le dispositif de raccordement comporte une barre (48) à crémaillère qui constitue la partie d'extrémité du dispositif de raccordement, et un pignon (50) qui est en prise avec la crémaillère (48) et qui est entraîné par l'arbre rotatif (54).

5. Appareil selon la revendication 4, caractérisé en ce que le pignon (50) est raccordé à l'arbre rotatif (54) par un accouplement à billes (52).
